# EUROPEAN PATENT APPLICATION

(11) **EP 2 028 602 A1**
(43) Date of publication of application: **25.02.2009**
(21) Application number: 07114638.5
(22) Date of filing: 20.08.2007
(51) Int. Cl.: G06F 21/00, G06F 21/02, G06F 11/14

(54) **Computer information protecting method**

(71) Applicant: Chou, Horng Jien, 42 Chongder 5th Road 40670 Taichung (TW)
(72) Inventor: Chou, Horng Jien, 42 Chongder 5th Road 40670 Taichung (TW)
(74) Representative: Beck, Michael Rudolf

(57) **Abstract**

A method for protecting information in a computer facility includes coupling a protecting device between the computer facility and an input device, such as a keyboard or a mouse, and coupling a storing media to the input device in order to intercept a pure information entering into the computer facility with the input device, and the information may be stored in the storing media for allowing the information entered with the input device to be sent to the computer facility to revive the computer facility. The input device may be coupled to the protecting device and then coupled to the input device, or directly coupled between the computer facility and the input device.

## Description

The invention relates to a protecting method for protecting the working data or files or information of a computer.

Typical computers may have memories or working files killed or damaged by computer viruses, and the users have to spend a lot of time to rebuild the data or files.

Various anti-virus software have been developed for killing only the selected kinds of computer viruses, but many new computer viruses may have developed everyday such that the previous anti-virus software may not kill the newly developed viruses.

The invention is to provide a method for protecting the working data or files or information and for allowing the damaged working data or files or information to be quickly revived.
FIG. 1 is a plan view of a facility to be protected;
FIGS. 2, 3, 4 are partial plan views of the facility; and
FIGS. 5, 6, 7 are plan views showing the different couplings of the protecting device to the facility to be protected.

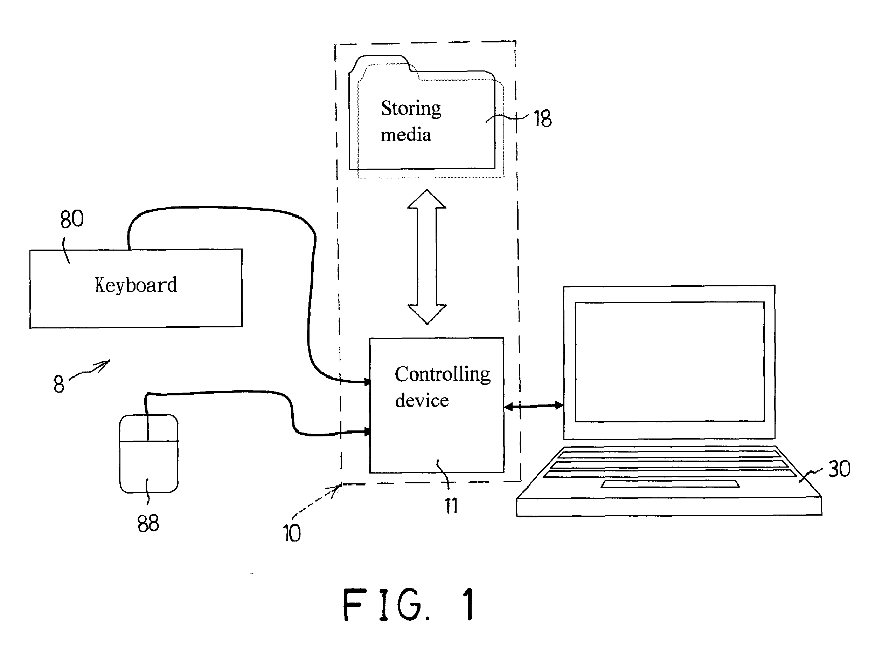

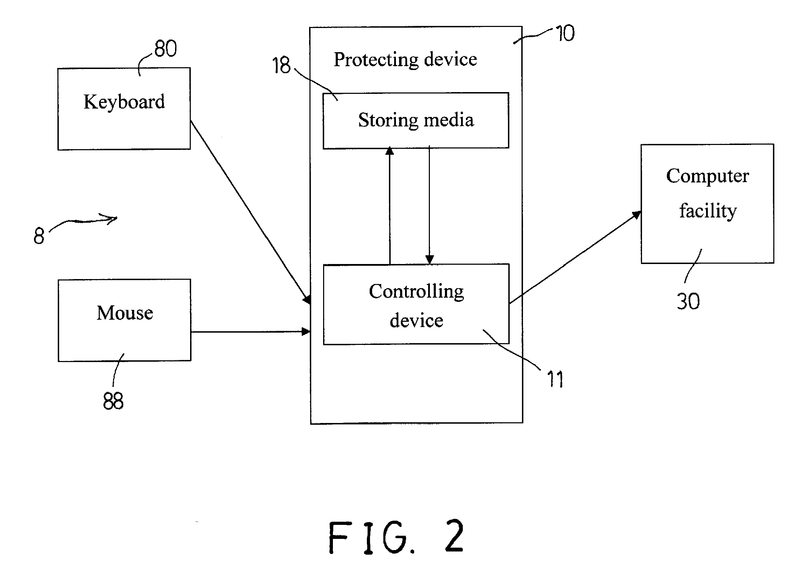

Referring to FIGS. 1-3, a data or information protecting method comprises preparing and providing a protecting device 10 which is coupled to a computer facility 30 and coupled to an entering or writing or input device 8, the input device 8 may include a keyboard 80, a mouse 88, a vocal or speech input device (not shown), and/or an optical input device (not shown), or other entering or writing devices, for allowing the protecting device 10 to be coupled between the computer facility 30 and the input device 8, or for separating the computer facility 30 and the input device 8 from each other.

The protecting device 10 includes a controlling device 11 to be coupled between the computer facility 30 and the input device 8 with electric cables or wirelessly with radio or infrared emitting and/or receiving devices (not shown). The keyboard 80 or the mouse 88 of the input device 8 are the original entering or writing tools or devices and may be used for one-way keying or writing or sending or entering data or information into the computer facility 30 such that the input device 8 will not be damaged by the computer viruses, and such that the data or information keyed or written or sent or entered by the input device 8 will be intercepted by the controlling device 11 and may become the pure or clean data or information and also will not be damaged by the computer viruses.

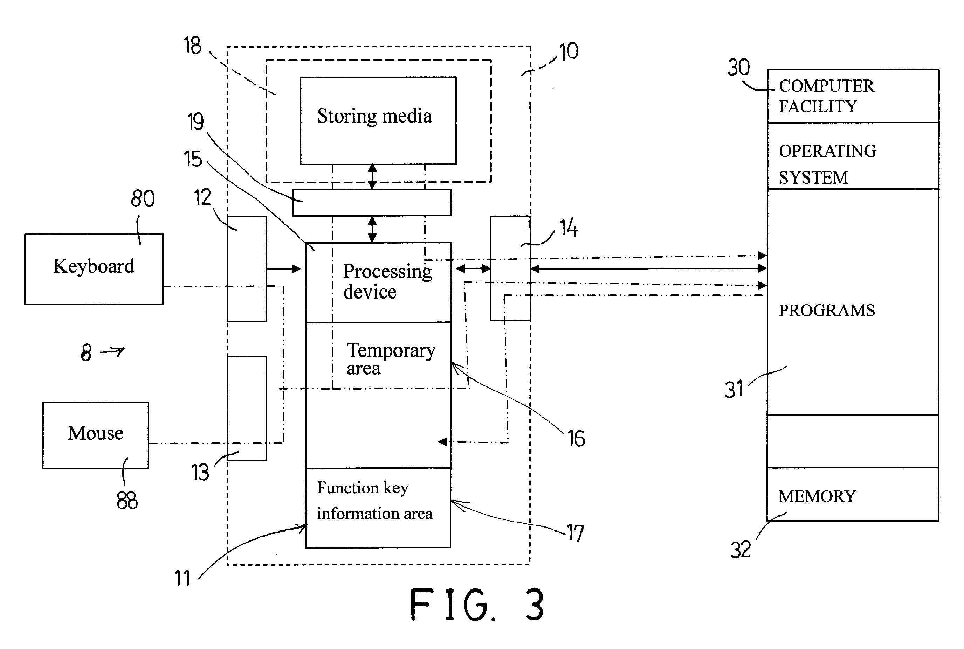

As shown in FIG. 3, the controlling device 11 includes one or more (such as two) terminals 12, 13 for coupling to the keyboard 80 and/or the mouse 88 of the input device 8 respectively, and another terminal 14 for coupling to the computer facility 30. The terminals 12-14 may be selected from various kinds of terminals, such as universal serial bus (USB) terminals, or the like. The controlling device 11 includes a processing device 15 and a temporary storing or accessing area 16 coupled between the computer facility 30 and the input device 8 for allowing the computer facility 30 to be processed with the keyboard 80 and/or the mouse 88 of the input device 8 indirectly via the controlling device 11. The controlling device 11 includes a function key information area 17 coupled to the computer facility 30 for receiving the function key information, such as the left key, the right key, the up key, the down key, the control (CTRL) key, the ALT key, or the like from the computer facility 30.

The protecting device 10 includes a memory or storing media 18 disposed or inbuilt in or out of the controlling device 11, or disposed in the computer facility 30, and coupled between the computer facility 30 and the controlling device 11 or the input device 8 for allowing the pure or clean data or information keyed or written or sent or entered by the input device 8 also to be sent to the storing media 18 and to be stored as a spare copy in the storing media 18. The coupling between the storing media 18 and the computer facility 30 is also one-way such that the data or information entered by the input device 8 and stored in the storing media 18 will not be damaged by the computer viruses.

The data or information entered by the input device 8 is to be sent to the computer facility 30 in the usual way to control or to operate the computer facility 30 which may be worked in the conventional way to use the programs 31 provided in the computer facility 30 and to generate the working data or files or information that may be stored in a memory or storing media 32 of the computer facility 30. The working data or files or information stored in the memory or storing media 18 may be equal to the working data or files or information stored in the memory or storing media 32 of the computer facility 30 and may be sent to the computer facility 30 to restore the memory or storing media 32 quickly when the memory or storing media 32 has been damaged by the computer viruses.

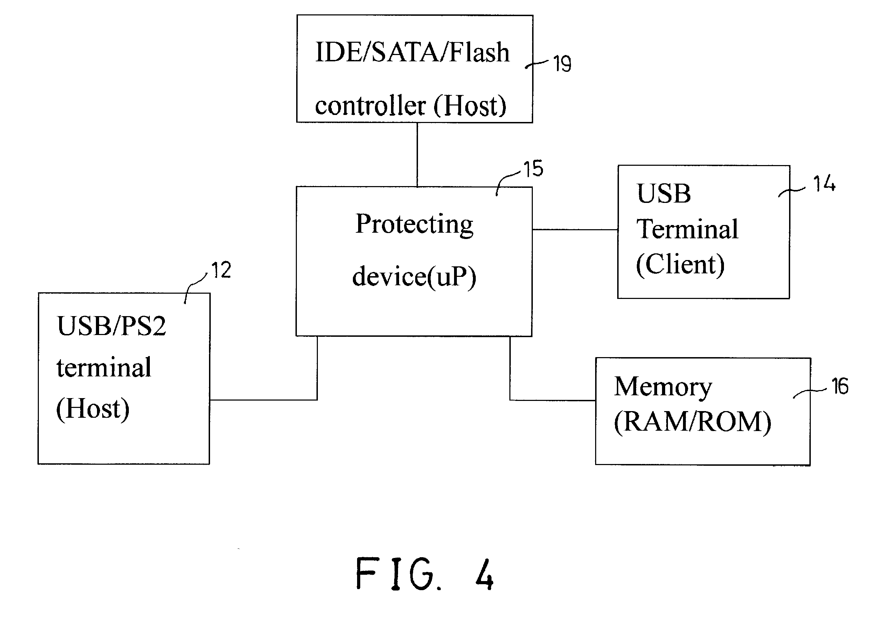

As shown in FIG. 4, the memories or storing media 18, 32 may be selected from random access memories (RAM), non-volatile memories, erasable memories, flash lights memories, etc., and the terminals 12, 13 may be selected from such as personal computer system 2 (PS/2) host for coupling the keyboard 80 and/or the mouse 88 of the input device 8 to the processing device 15 of the controlling device 11, an integrated drive electronics (IDE) or a serial AT attachment (SATA) or a flash controller 19 may be used for coupling the controlling device 11 to the memory or storing media 18. The terminal 14 may also be a USB terminal 14 for coupling to the computer facility 30.

In operation, when the computer facility 30 is switched on or initialized or energized, the controlling device 11 may receive the function key information, such as the left key, the right key, the up key, the down key, the control (CTRL) key, the ALT key, or the like from the computer facility 30 and stored in the function key information area 17 of the controlling device 11 for allowing the computer facility 30 to be operated or processed with the keyboard 80 and/or the mouse 88 of the input device 8 indirectly via the controlling device 11. The working procedures or data or information may be stored in the temporary storing or accessing area 16 and may then be stored in the memory or storing media 32 of the computer facility 30 any time, or when the user wishes to store the information, particularly when the computer facility 30 is warned to be attacked by a computer virus.

When the computer facility 30 has been attacked or damaged by a computer virus, the memory or storing media 32 of the computer facility 30 may be formatted, and the spare copy or the pure or clean data or information keyed or written or sent or entered by the input device 8 and stored in the storing media 18 may then be quickly sent to the memory or storing media 32 of the computer facility 30 and/or may be operated or processed with the programs 31 provided in the computer facility 30 to generate the working data or files or information again that may be stored in the memory or storing media 32 of the computer facility 30, and thus to quickly restore the data or information that have been damaged by the computer viruses.

The programs 31 may have to be copied into the computer facility 30 again when the computer facility 30 has been attacked or damaged by the computer viruses. The programs 31 may be quickly restored or copied into the computer facility 30 in the usual way. However, the copying of the programs 31 into the computer facility 30 is not related to the present invention and will not be described in further details. The storing media 18 may also be directly coupled between the keyboard 80 or the mouse 88 of the input device 8 and the computer facility 30; or coupled between the keyboard 80 or the mouse 88 of the input device 8 and the controlling device 11, for acting as an intercepting means for directly intercepting the pure or clean data or information keyed or written or sent or entered into the computer facility 30 by the input device 8.

It is further to be noted that the pure or clean data or information keyed or written or sent or entered by the input device 8 and sent to the storing media 18 and/or stored as a spare copy in the storing media 18 may further be transmitted to a monitor servo or may be coupled to a monitoring circuit or program in order to detect and to monitor the work done with the input device 8, for allowing any unusual or abnormal action or operation to be found as early as possible. The input device 8 may also be shut down or switched off when the unusual or abnormal action or operation has been found.

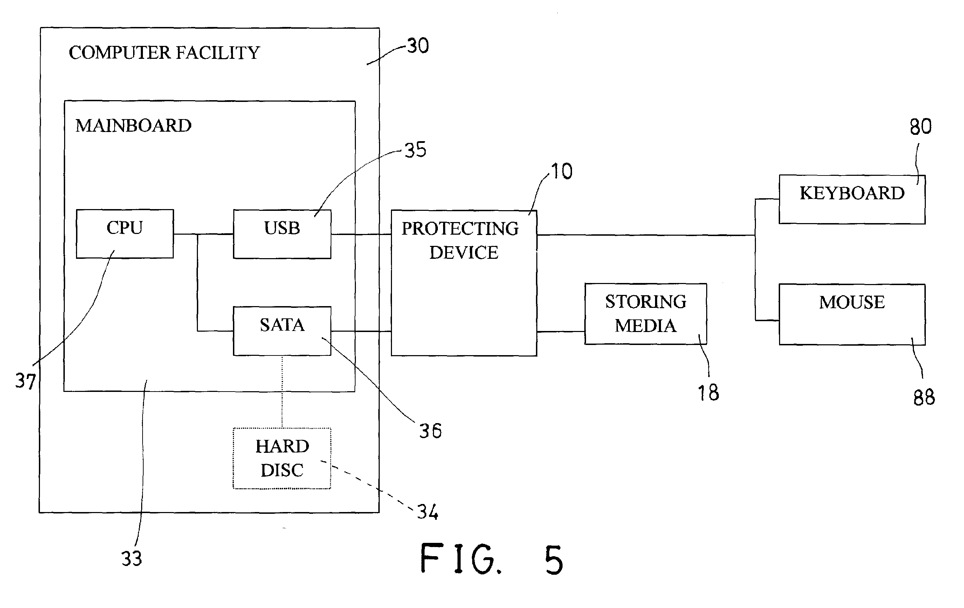

As also shown in FIG. 5, the protecting device 10 may be disposed outside the computer facility 30 and coupled between the computer facility 30 and the input device 8, for example, the computer facility 30 includes a mainboard 33 having one or more memories or hard discs 34 coupled thereto, and a terminal 35, such as a universal serial bus (USB) terminal or the like 35 and a controller 36, such as a SATA controller 36 coupled to a central processing unit (CPU) 37 for coupling to the protecting device 10, for directly intercepting the pure or clean data or information keyed or written or sent or entered into the computer facility 30 by the input device 8.

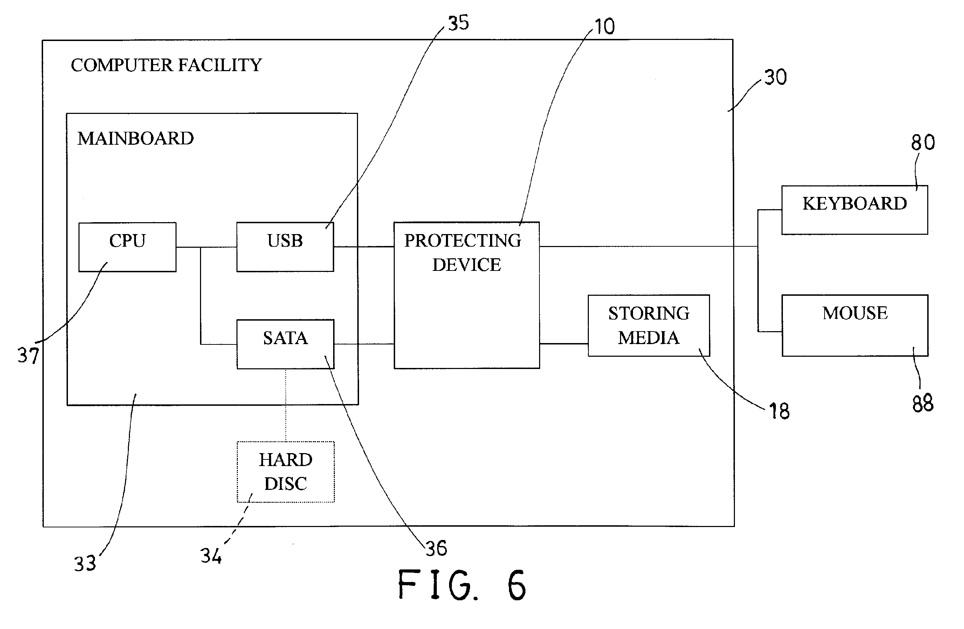

Alternatively, as shown in FIG. 6, the protecting device 10 may also be disposed inside the computer facility 30, but disposed beside the mainboard 33 and coupled between the mainboard 33 of the computer facility 30 and the input device 8 for directly intercepting the pure or clean data or information keyed or written or sent or entered into the computer facility 30 by the input device 8.

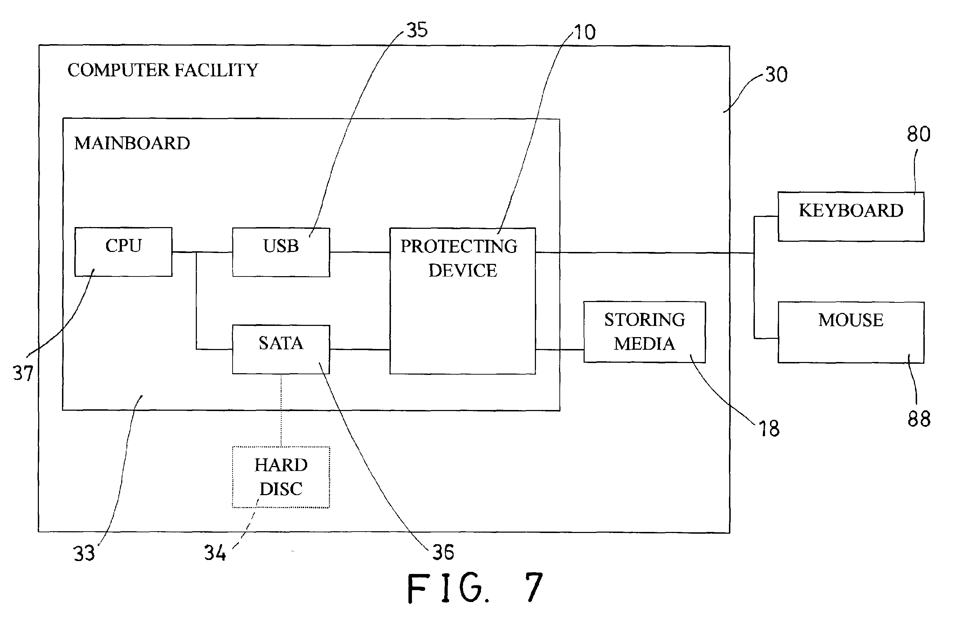

Further alternatively, as shown in FIG. 7, the protecting device 10 may also be disposed inside the computer facility 30, and disposed inside the mainboard 33 and directly coupled between the USB terminal 35 and the SATA controller 36 of the mainboard 33 and the input device 8 for directly intercepting the pure or clean data or information keyed or written or sent or entered into the computer facility 30 by the input device 8.

## Claims

1. A method for protecting information in a computer facility, said method comprising:
providing and coupling a protecting device (10) between said computer facility (30) and an input device (8),
providing and coupling a storing media (18) to said input device,
intercepting an information entering into said computer facility with said input device, and
storing said information entered with said input device in said storing media, for allowing said information entered with said input device to be sent to said computer facility when said computer facility is damaged.

2. The method as claimed in claim 1, wherein said input device (8) is coupled to said protecting device (10).

3. The method as claimed in claim 1 or 2, wherein said protecting device (10) includes a processing device (15) coupled between said computer facility (30) and said input device (8).

4. The method as claimed in one of claims 1 to 3, wherein said protecting device (10) includes a temporary storing area (16) coupled between said computer facility (30) and said input device (8).

5. The method as claimed in one of claims 1 to 4, wherein said protecting device (10) includes a function key information area (17) coupled to said computer facility.

6. The method as claimed in one of claims 1 to 5 further comprising wirelessly coupling said input device to said protecting device.

7. The method as claimed in one of claims 1 to 6 further comprising wirelessly coupling said protecting device to said computer facility.

8. The method as claimed in one of claims 1 to 7 further comprising disposing said protecting device in said computer facility.

9. The method as claimed in one of claims 1 to 8 further comprising providing and disposing a mainboard in said computer facility, and disposing said protecting device in said mainboard of said computer facility.

10. Protecting device (10) for protecting information in a computer, said device being adapted to be functionally arranged between a computer and an input device (8), said device comprising:
a processing device (15) to be coupled between said computer and said input device (8),
a temporary storing area (16) to be coupled between said computer and said input device (8),
a function key information area (17) to be coupled to said computer, and
a memory or storing media (18) for storing data entered by the input device (8) as a spare copy.
